# EUROPEAN PATENT SPECIFICATION

(11) **EP 3 185 049 B1**
(45) Date of publication and mention of the grant of the patent: **29.08.2018**
(21) Application number: 15202556.5
(22) Date of filing: 23.12.2015
(51) Int. Cl.: G01W 1/10

(54) **A METHOD AND A SYSTEM FOR WEATHER FORECASTING**
VERFAHREN UND SYSTEM ZUR WETTERVORHERSAGE
PROCÉDÉ ET SYSTÈME DE PRÉVISION MÉTÉOROLOGIQUE

(43) Date of publication of application: 28.06.2017
(73) Proprietor: Advanced Digital Broadcast S.A., 1292 Chambesy (CH)
(72) Inventor: Wowro, Grzegorz, 65-119 Zielona Gora (PL)
(74) Representative: Kancelaria Eupatent.pl Sp. z.o.o

(56) References cited:
- US-A1- 2008 264 164

## Description

### TECHNICAL FIELD

The present disclosure relates to a method and a system for weather forecasting. In particular the present disclosure relates to short term forecasting, where the weather prediction is obtained instantly.

### BACKGROUND

Prior art defines systems where forecast is prepared basing solely on behavior, temperature, or altitude of clouds. Those systems require availability of historical data gathered during several days or weeks, because they base only on observation of thermal radiation sources like sky and clouds. Such method requires time and appropriate location and exposure of the measuring device.

A European patent application EP2891904 discloses a method concerned with the operation of solar power plants, which involves recursive updating of estimated parameters pertaining to pre-defined and physically motivated cloud evolution models that are instantiated and assigned to clouds identified in images taken by a ground-based visible-light camera. Identification of clouds, which includes assigning individual pixels of an image to one or several identified clouds, and selection of matching cloud models invoke some elaborate complexity beyond conventional pixel-wise image processing. This ultimately allows to predict a cloud-wise, as opposed to a pixel-wise, evolution based on cloud evolution models with a limited number of estimated parameters. A thermal imaging camera is therefore used to determine the elevation of clouds.

US 2008/0264164 A1 discloses a method for forecasting weather based on infrared observations of the sky. It would be advantageous to execute a faster method of forecasting, without the need of possessing any weather historical data. Furthermore, in case when a user does not have access to data about user's location and cannot use communication equipment, such method should allow the user to predict weather for nearest hours. The forecast should be obtainable within a few seconds, even during a dark night.

Therefore the object of the present disclosure is an improvement of a system and a method for weather forecasting, which allows for fast and less troublesome weather forecasting.

### SUMMARY

There is disclosed herein a method and system for weather forecasting, according to the appended claims.

### BRIEF DESCRIPTION OF DRAWINGS

These and other objects of the disclosure presented herein, are accomplished by providing a method and a system for weather forecasting. Further details and features of the present disclosure, its nature and various advantages will become more apparent from the following detailed description of the preferred embodiments shown in a drawing, in which:
Fig. 1 presents an example of thermal imaging picture,
Fig. 2 presents another example of thermal imaging picture,
Fig. 3 presents a diagram of the method according to the present disclosure;
Fig. 4 presents a diagram of the system according to the present disclosure;
Fig. 5 presents another diagram of the system according to the present disclosure.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

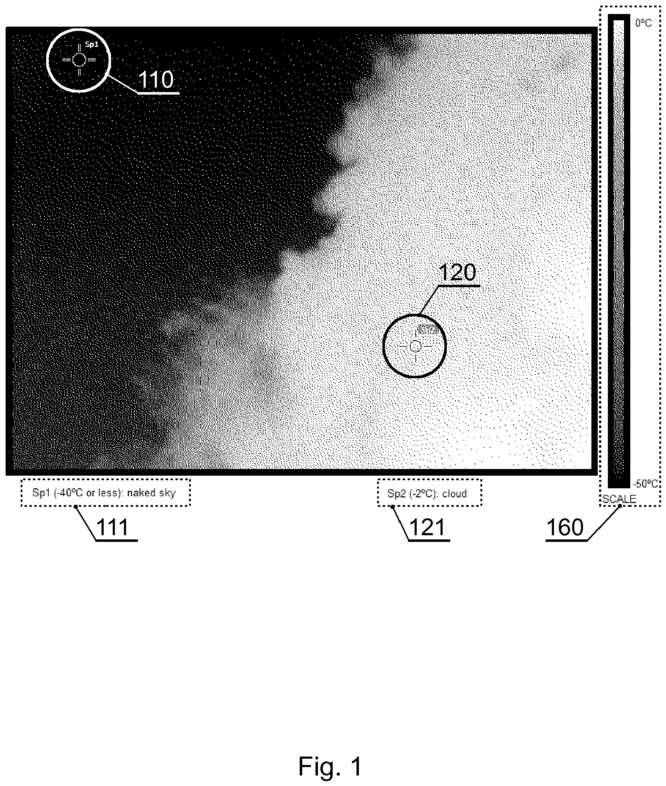

Fig. 1 presents an example of a thermal imaging picture of the sky obtained from thermal imaging camera. This example shows a thermal difference between naked sky and cloudy sky. Each pixel of the picture (e.g. 110, 120) describes the value of temperature 111, 121 at a particular point. According to the temperature scale 160, the light areas indicate high temperatures while dark areas indicate low temperatures. The heat radiation from the clouds is much higher than from the clear sky. Therefore, the presence or absence of clouds influences the wind chill. When the sky is clear, small amount of radiation goes down and therefore wind chill is cold. It results in that objects on the ground do not get an additional energy from the clouds and their temperatures decrease.

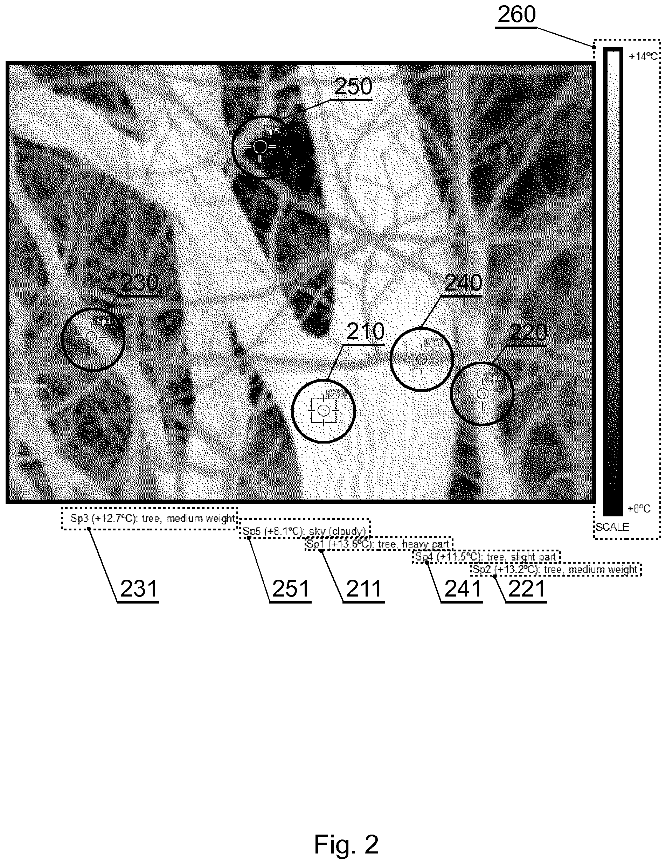

Fig. 2 presents an example of another thermal imaging picture generated by a thermal imaging camera. In this case three kinds of elements are recognizable: sky and clouds, big-seized branches of trees and small branches of trees.

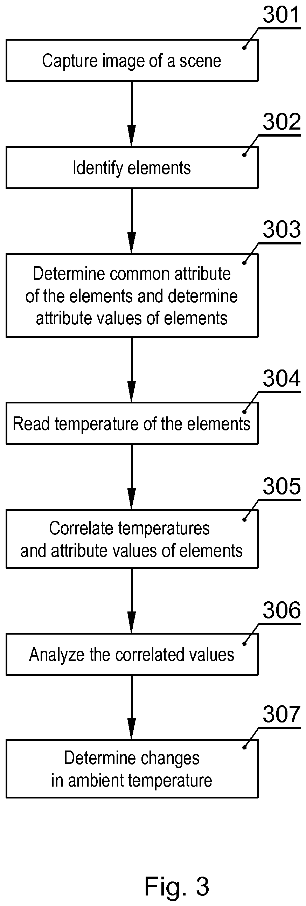

Fig. 3 presents a diagram of the current method for weather forecasting. The method starts at step 301 from capturing an image of a scene with a thermal imaging camera 410. The next step 302 includes identifying at least two different elements within the image by an element recognition module 504. By "elements" there are understood for example a thick fragment (e.g. a trunk) of a tree, a thinner branch of the tree, or different parts of a building or a building itself. Subsequently, there is determined 303 at least one common attribute of the elements, wherein each element is described with its own attribute value. The common attribute is a physical parameter, preferably a surface area of the recognized element or its density. Next, the temperatures of the elements are read 304. The temperatures of the elements are correlated in step 305 with their attribute values. This means that the temperature of the element is paired with at least one of its attributes. Next, the correlated values are analyzed in step 306. The step 306 of analyzing the correlated values may comprise determining thermal inertias of the elements based on their attribute values and comparing temperatures of the elements. In other words, based on a given recognized or determined attribute, for example mass, density or surface area of the element, the thermal inertia or other thermal parameter describing the element can be approximated. These thermal parameters can be accessed for example from a database of the system. Such database may comprise data relating to recognizable elements, which allows to determine or approximate their thermal parameters, in this case the thermal inertia. After that, there follows a step of determining 307 changes in ambient temperature based on the analysis result. For example, determining 307 changes is carried out by selecting the element of lower thermal inertia and determining whether its temperature is lower or higher than the temperature of the element of higher thermal inertia. If the temperature is higher, it is determined that the ambient temperature is increasing. On the other hand, if the temperature is lower, it is determined that the ambient temperature is decreasing. Further, in case of the compared temperatures being equal, it can be determined that the ambient temperature is not changing.

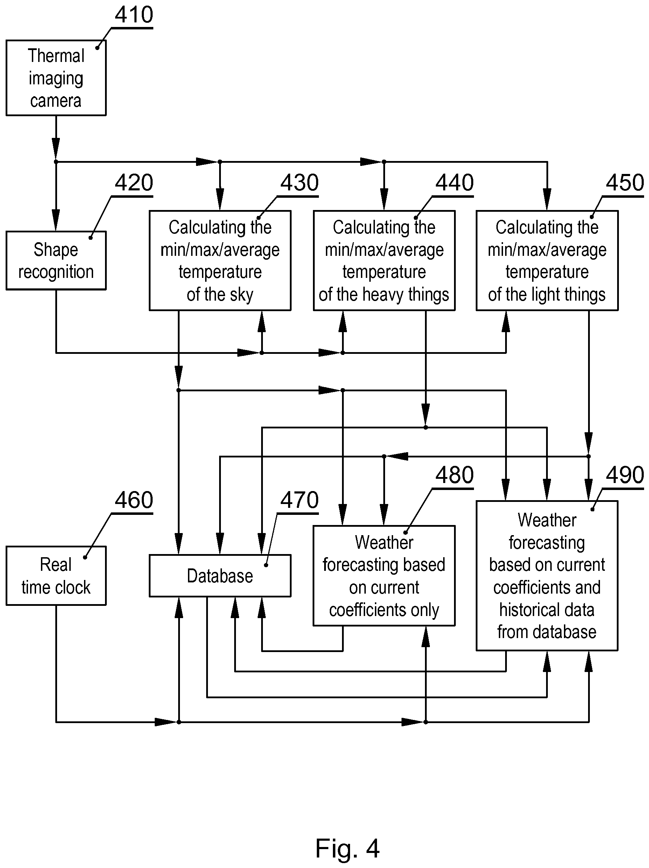

Fig. 4 presents a diagram of the system according to the present disclosure. The system comprises a thermal imaging camera 410, a shape recognition module 420, calculation modules 430, 440, 450, a real time clock 460, a database 470 and weather forecasting modules 480, 490. The operation of the system is described in relation to the image depicted in Fig. 2.

An image of the scene is taken with the thermal image camera 410. After the shapes and sizes are recognized by the shape recognition module 420, the calculation modules 430, 440, 450 generate minimal, maximal and average (or median) values of temperatures of these objects. In the example of Fig. 2, the following information are obtained: a) the sky is recognized as cloudy 250 and has the temperature 251 of about +8°C, b) big and heavy parts of the trees 210, 220 have the temperature 221, 211 of about +13.5°C, c) small and light parts of the trees 240 have the temperature 241 of about +11.5°C.

The thermal imaging camera is capable of generating pictures which can be used to recognize shape and size of objects and to recognize the values of temperatures of observed surfaces. Such camera typically produces from 9 up to 30 pictures per second. The thermal imaging camera 410 may be installed permanently in some place on the outside or may be used as a portable device.

Pictures from the thermal imaging camera 410 are sent to the shape recognition module 420. In that module the object recognition methods, commonly applied in traditional photography, may be used. In the shape recognition module 420 still life objects are recognized, for example elements such as clouds, trees, rocks, buildings. The shape recognition module 420 is also configured to recognize the size of those elements. For example, if a tree is recognized in the picture, then also particular elements of that tree are recognized i.e.: main trunk, big branches and small branches. Generally, the results of operation of the shape recognition module 420 may be separated into three groups of elements. The first group may comprise elements associated with sky. The calculation of minimal, maximal and average temperature of sky and clouds is performed by calculation module 430. The second group may comprise elements associated with surrounding objects having significant size and weight. The calculation of minimal, maximal and average temperature of these objects is performed by calculation module 440. The third group may comprise elements associated with surrounding objects being small and light. The calculation of minimal, maximal and average temperature of these objects is performed by calculation module 450. All results of measurements from modules 430, 440, 350 may be associated with the timestamp from the real time clock 460 and subsequently stored in the database 470 for further use. The results stored in database 470 can be applicable in a situation when the thermal imaging camera 410 is not mobile and is installed in the fixed location - in such case these results help to increase the accuracy of the forecast. The weather forecasting module 490 is responsible for generating the weather forecast based on current coefficients received from calculation modules 430, 440, 450 and historical data from the database 470. These coefficients describe character of changes of ambient temperature, determined according to the disclosed method or similarly. When there is no historical data available in the database 470, another weather forecasting module 480 is responsible for generating the weather forecast. It bases only the current coefficients received from calculating modules 430, 440, 450.

The values of temperatures 251, 211, 221, 241 of the recognized elements, objects 250, 210, 220, 240 are transferred to the weather forecasting module 480. In that module weather forecasting algorithms based on differences in temperatures of recognized objects are used. The temperature of heavy parts of trees (b, Sp1, +13.6°C) 211 (Sp1 stands for Sepected point 1) indicates what was an average temperature of trees calculated from about last 6 hours. Whereas the temperature of light parts of trees (c, Sp4, +11.5°C) 241 indicates what was an average temperature of trees calculated from about last 1 hour. By comparing these values of temperatures it is possible to determine that 6 hours ago the temperature was higher than 1 hour ago. According to this one may say that the temperature during last hours was decreasing and that it will continue to decrease. In this manner, the forecasting is effected. In order to increase the accuracy of forecasting, more factors may be analyzed. For example, by checking the date and time of the thermal photo being taken, it is possible to determine the season of the year and the time of the day. Consequently, the system knows when the sunset or sunrise will occur. Furthermore, taking into account more characteristic temperature points, for example selecting several points on a heavy part of tree, in order to calculate average temperature of that part, gives more accurate results. When analyzing the differences in temperatures of imaged objects, it is possible to assign different dissipation coefficients dependent on the type of the object (building, tree, soil). Another feature of the system may be the ability of recognition of the sunny and shadowed side of the objects as well as prediction of the sun movement. Even when the sun is down, the temperatures on the different sides of objects, buildings may vary significantly. Depending on the direction from which the photo is taken (East, West, North, and South), temperatures of the object may vary.

The difference between temperatures of (b, Sp1, +13.6°C) 211 and (c, Sp4, +11.5°C) 241 is not so big (about 2°C) and the sky is cloudy (a, Sp5, +8.1°C) 251, therefore it can be observed that the speed of temperature changes will not be high. In other words, the speed of the changes of ambient temperature is determined.

The basic principle of the presented solution is that the forecast is not only based on thermal images of the sky but also and most significantly on thermal images of surrounding objects. An important coefficient influencing the weather condition is a wind chill. The wind chill strongly depends on several factors: solar irradiance, wind, rain, snow, clouds, infrared radiance from all surfaces which surround the human (e.g. structures like buildings, trees, clouds). As mentioned before, the possession of weather historical data is not necessary for the system and the method, presented in this disclosure. Therefore analyzing pictures received from thermal imaging camera is crucial for obtaining the forecast of the wind chill. The thermal radiation receivers, mainly surrounding objects, accumulate energy in form of the heat. Owing to this phenomenon, it is possible to calculate, deduce the temperature changes throughout a certain amount of time, basing on the shape, size and weight of observed objects and their actual temperature resulting from energy accumulation and dissipation. In other words, a thermal image of the surrounding objects constitutes historical data for the system and the method. Historical data is based on the analysis of the thermal image which instantly shows the differences in temperatures of objects with different size, weight.

The described method allows for obtaining an immediate weather forecast without having access to the weather historical data. The system is compact and mobile what makes it applicable in a broad variety of situations and sectors of economy. For example farmers may use the system to predict ground frosts which could damage their crops. A farmer having big and spread fields may take a system embodied in form of a mobile device and check individually the forecast for each field and decide, whether covering of the field for the night is necessary. Another region of usage may be in military by the soldiers being in regions where the access to weather forecast is limited.

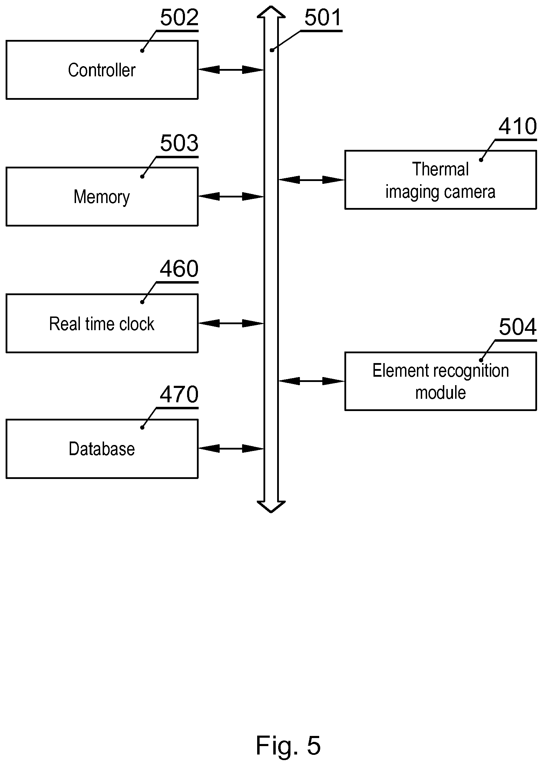

Fig. 5 shows a more general depiction of the system according to the present disclosure. In this case, the element recognition module 504 assumes the function of a shape recognition module 420, and the controller 502 takes place of calculation modules 430, 440, 450, as well as weather forecasting modules 480, 490. The system may be realized using dedicated components or custom made FPGA or ASIC circuits. The system comprises a data bus 501 communicatively coupled to a memory 503. Additionally, other components of the system are communicatively coupled to the system bus 501 so that they may be managed by a controller 502. The memory 503 may store computer program or programs executed by the controller 502 in order to execute steps of the method according to Fig 3.

It can be easily recognized, by one skilled in the art, that the aforementioned method for weather forecasting may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

## Claims

1. A method for weather forecasting, comprising the steps of:
- capturing (301) an image of a scene with a thermal imaging camera (410);
**characterized in that** it further comprises the steps of:
- identifying (302) at least two different elements within the image by an element recognition module (504);
- determining (303) at least one common physical parameter of the elements, wherein each element is described with its own physical parameter value;
- reading (304) temperatures of the elements;
- correlating (305) the temperatures of the elements with their physical parameter values;
- analyzing (306) the temperatures and physical parameter values of the elements, comprising determining a thermal parameter of the elements based on their physical parameter values and comparing temperatures of the elements; and
- determining (307) changes in ambient temperature based on the thermal parameter and temperatures of the elements.

2. The method according to claim 1, wherein the physical parameter describes surface area.

3. The method according to claim 1, wherein the physical parameter is density.

4. The method according to any preceding claim, wherein the temperature of identified elements is their average temperature calculated based on plurality of points.

5. A computer program comprising program code means for performing all the steps of the method according to any of claims 1-4 when said program is run on a computer.

6. A computer readable medium storing computer-executable instructions performing all the steps of the method according to any of claims 1-4 when executed on a computer.

7. A system for weather forecasting, wherein the system comprises a data bus (501) configured to communicate all the elements of the system, a controller (502) and memory (503) for storing software means for the controller (502) and any temporary data needed for operation of the system, the system being **characterized in that** it further comprises:
- a thermal imaging camera adapted to capture an image of a scene;
- an element recognition module adapted to identify at least two different elements within the image, characeterized **in that**:
- the controller (502) is configured to:
∘ determine at least one common physical parameter of the elements, wherein each element is described with its own physical parameter value;
∘ read the temperatures of the elements;
∘ correlate the temperatures of elements with their physical parameter values;
∘ analyze the temperatures and physical parameter values of the elements, comprising determining a thermal parameter of the elements based on their physical parameter values and comparing temperatures of the elements; and
∘ determine changes in ambient temperature based on the thermal parameter and temperatures of the elements.

## Patentansprüche

1. Verfahren zum Vorhersagen des Wetters, umfassend die Schritte:
- Erfassen (301) eines Bilds einer Szene mit einer Wärmebildkamera (410);
**dadurch gekennzeichnet, dass** es ferner die Schritte umfasst:
- Identifizieren (302) von mindestens zwei unterschiedlichen Elementen im Bild durch ein Modul (504) zum Erkennen von Elementen;
- Bestimmen (303) mindestens eines gemeinsamen physikalischen Parameters der Elemente, wobei jedes Element mit seinem eigenen physikalischen Parameterwert beschrieben ist;
- Ablesen (304) von Temperaturen der Elemente;
- Zuordnen (305) der Temperaturen der Elemente zu ihren physikalischen Parameterwerten;
- Analysieren (306) der Temperaturen und der physikalischen Parameterwerte der Elemente, umfassend das Bestimmen eines thermischen Parameters der Elemente auf der Grundlage ihrer physikalischen Parameterwerte und Vergleichen der Temperaturen der Elemente; und
- Bestimmen (307) von Änderungen in der Umgebungstemperatur auf der Grundlage des thermischen Parameters und den Temperaturen der Elemente.

2. Verfahren nach Anspruch 1, wobei der physikalische Parameter einen Flächenbereich beschreibt.

3. Verfahren nach Anspruch 1, wobei der physikalische Parameter die Dichte ist.

4. Verfahren nach einem vorhergehenden Anspruch, wobei die Temperatur der identifizierten Elemente ihre durchschnittliche Temperatur ist, die auf der Grundlage einer Vielzahl von Punkten berechnet wurde.

5. Computerprogramm, umfassend ein Programmcodemittel zum Durchführen aller Schritte des Verfahrens nach Ansprüchen 1 bis 4, wenn das Programm auf einem Computer ausgeführt wird.

6. Computerlesbares Medium, das computerausführbare Anweisungen speichert, die alle Schritte des Verfahrens nach einem der Ansprüche 1 bis 4 durchführen, wenn sie auf einem Computer ausgeführt werden.

7. System zum Vorhersagen des Wetters, wobei das System einen Daten-Bus (501), der konfiguriert ist, um alle Elemente des Systems miteinander zu verbinden, eine Steuerung (502) und einen Speicher (503) zum Speichern von Softwaremitteln für die Steuerung (502) und jeglicher temporärer Daten umfasst, die zum Betreiben des Systems benötigt werden, wobei das System **dadurch gekennzeichnet ist, dass** es ferner umfasst:
- eine Wärmebildkamera, die angepasst ist, um ein Bild einer Szene zu erfassen;
- ein Modul zum Erkennen von Elementen, das angepasst ist, um mindestens zwei unterschiedliche Elemente im Bild zu identifizieren,
**dadurch gekennzeichnet, dass**:
- die Steuerung (502) konfiguriert ist zum:
∘ Bestimmen mindestens eines gemeinsamen physikalischen Parameters der Elemente, wobei jedes Element mit seinem eigenen physikalischen Parameterwert beschrieben ist;
∘ Ablesen der Temperaturen der Elemente;
∘ Zuordnen der Temperaturen von Elementen zu ihren physikalischen Parameterwerten;
∘ Analysieren der Temperaturen und physikalischen Parameterwerte der Elemente, umfassend das Bestimmen eines thermischen Parameters der Elemente auf der Grundlage ihrer physikalischen Parameterwerten und das Vergleichen der Temperaturen der Elemente; und
∘ Bestimmen von Änderungen in der Umgebungstemperatur auf der Grundlage des thermischen Parameters und Temperaturen der Elemente.

## Revendications

1. Méthode de prévision météorologique, comprenant les étapes suivantes :
- saisie (301) d'une image d'une scène avec une caméra d'imagerie thermique (410) ;
**caractérisée en ce qu'**elle comprend en outre les étapes suivantes :
- identification (302) d'au moins deux éléments différents au sein de l'image par un module de reconnaissance d'élément (504) ;
- détermination (303) d'au moins un paramètre physique commun des éléments, chaque élément étant décrit à l'aide de sa propre valeur de paramètre physique ;
- relevé (304) de températures des éléments ;
- corrélation (305) des températures des éléments avec leurs valeurs de paramètre physique ;
- analyse (306) des températures et des valeurs de paramètre physique des éléments, comprenant la détermination d'un paramètre thermique des éléments en fonction de leurs valeurs de paramètre physique, et comparaison des températures des éléments ; et
- détermination (307) des variations de température ambiante sur la base des paramètres thermiques et des températures des éléments.

2. Méthode selon la revendication 1, le paramètre physique décrivant la superficie.

3. Méthode selon la revendication 1, le paramètre physique étant la densité.

4. Méthode selon une quelconque des revendications précédentes, la température des éléments identifiés étant leur température moyenne calculée sur la base d'une pluralité de points.

5. Programme informatique, comprenant un dispositif de code de programme pour l'exécution de toutes les étapes de la méthode selon une quelconque des revendications 1 à 4, ledit programme étant exécuté sur un ordinateur.

6. Support lisible par ordinateur stockant des instructions exécutables par ordinateur exécutant toutes les étapes de la méthode selon une quelconque des revendications 1 à 4 lors de leur exécution sur un ordinateur.

7. Système de prévision météorologique, le système comprenant un bus de données (501) configuré pour communiquer tous les éléments du système, un contrôleur (502) et une mémoire (503) pour le stockage du logiciel pour le contrôleur (502), et toutes données provisoires nécessaires pour l'utilisation du système, le système étant **caractérisé en ce qu'**il comprend en outre :
- une caméra d'imagerie thermique adaptée pour saisir une image d'une scène ;
- un module de reconnaissance d'élément adapté pour identifier au moins deux éléments différents au sein de l'image, **caractérisé en ce que** :
- le contrôleur (502) est configuré pour :
∘ déterminer au moins un paramètre physique commun des éléments, chaque élément étant décrit à l'aide de sa propre valeur de paramètre physique ;
∘ relever les températures des éléments ;
∘ effectuer la corrélation des températures des éléments avec leurs valeurs de paramètre physique ;
∘ analyser les températures et des valeurs de paramètre physique des éléments, comprenant la détermination d'un paramètre thermique des éléments en fonction de leurs valeurs de paramètre physique, et comparer les températures des éléments ; et
∘ déterminer des variations de température ambiante sur la base des paramètres thermiques et des températures des éléments.
